# EUROPÄISCHE PATENTSCHRIFT

(11) **EP 2 348 262 B1**
(45) Veröffentlichungstag und Bekanntmachung des Hinweises auf die Patenterteilung: **01.01.2014**
(21) Anmeldenummer: 11000272.2
(22) Anmeldetag: 14.01.2011
(51) Int. Cl.: F24J 2/52

(54) **Trapezdach-Befestigungsvorrichtung**
Fastening device for trapezoidal roof
Dispositif de fixation sur toit trapézoïdal

(30) Priorität: 21.01.2010 DE 202010001238 U; 06.02.2010 DE 102010007105
(43) Veröffentlichungstag der Anmeldung: 27.07.2011
(73) Patentinhaber: VM Edelstahltechnik GmbH, 58840 Plettenberg (DE)
(72) Erfinder: Mächtle, Daniel, 58840 Plettenberg (DE)
(74) Vertreter: Jakelski, Joachim

(56) Entgegenhaltungen:
- DE-U1-202009 003 862
- DE-U1-202009 004 269
- JP-A- 2007 284 956

## Beschreibung

Die Erfindung betrifft eine Vorrichtung zur Befestigung von Bauelementen auf Trapezdächern nach dem Oberbegriff des Anspruchs 1.

### Stand der Technik

Insbesondere auf Industriebauten kommen zunehmend sogenannte Trapezdächer zum Einsatz. Hierbei handelt es sich um Blechdächer, deren Bleche ein Trapezprofil aufweisen.

Nun ist es gerade in heutiger Zeit gewünscht, auch auf Trapezdächern Solarelemente, also beispielsweise fotovoltaische Solarzellen oder solarthermische Elemente anzuordnen. Hierbei stellt sich das Problem, diese Solarzellen auf dem Trapezdach zu befestigen. Dabei muss berücksichtigt werden, dass die Trapezbleche oftmals unterschiedliche Dimensionen und Gestalt aufweisen.

Aus der DE 20 2009 003 124 U1 sowie aus der DE 20 2009 004 269 U1 sind Halterungen für Solarmodule zur Befestigung an einem Dachelement, das ein regelmäßiges, mehrere Sicken aufweisendes Profil aufweist, welches allgemein als Trapezprofil bezeichnet wird, bekannt geworden.

Die DE 20 2009 003 862 U1 offenbart eine Trapezdach-Befestigungsvorrichtung, welche zur Verbesserung der Flexibilität bezüglich der Verwendung für unterschiedliche Dachplattenprofile Stützbleche aufweist, die auf den Profilbergen flächig oder teilflächig aufliegen und profilbergflankenseitig mit diesen verbunden sind und die über einen Anschluss für Funktionsaufbauten verfügen. Hierzu ist jeweils beidseitig der Profilberg-Mittellinie ein mindestens zweiteiliges Stützblech angeordnet, die Stützblechteile eines Stützbleches sind jeweils durch ein Scharnier miteinander verbunden und die beiden Stützblechteile, die flächig an einer Profilbergflanke anliegen oder teilweise anliegen, sind im Bereich der Profilberg-Mittellinie mittels einer Verbindung, die gleichzeitig als Anschlussbefestigung für die Funktionsaufbauten dienen kann, miteinander verbunden. Diese Anordnung besteht im Wesentlichen aus zwei übereinanderliegenden relativ zueinander verschieblichen Scharnieren, um so an unterschiedlich breite Trapezdachprofile angepasst werden zu können. Die Seitenelemente, die bei dieser Ausführung durch die jeweiligen seitlichen Stützblechteile der Scharniere gebildet werden, werden durch eine Gewindebolzen-Mutter-Verbindung, welche das Trapezprofil durchragt, befestigt. Problematisch bei dieser Trapezdach-Befestigungsvorrichtung ist, dass sie nicht ohne Weiteres an unterschiedliche Trapezformen anpassbar ist. Insbesondere ist keine optimale Anpassung an Trapezdächer mit vergleichsweise hohen Hochsicken (Profilberge) möglich, da die Befestigung an den seitlichen Flanken des Trapezprofils durch die Position der Gewindebolzenmutter-Verbindung festgelegt ist. Diese ist im oberen Bereich des Profilbergs angeordnet und kann nicht in Richtung der Profiltäler verschoben werden. Durch diese Befestigung im oberen Bereich können nachteilige Kräfte- und Drehmomentverhältnisse entstehen, die beispielsweise bei Auftreten sehr großer Windkräfte sogar zu einer Beschädigung des Trapezprofils führen können.

Eine Befestigungsvorrichtung für eine Dachbefestigung geht ferner aus der JP 20070284956 A hervor. Diese Befestigungsvorrichtung weist zwei drehbare Schenkel auf, die auf dem Dach befestigt werden und die an einem Befestigungselement, welches beispielsweise der Befestigung von weiteren Bauelementen dient, drehbar gelagert sind und dieses halten.

Die DE 20 2009 004 269 U1 offenbart eine Halterung für Solarmodule zur Befestigung an einem Dachelement, das ein regelmäßiges, mehrere Sicken aufweisendes Profil aufweist. Bei dieser Befestigungsvorrichtung ist ein Halteelement an wenigstens eine Sicke des Dachelements angepasst und umgreift die Sicke im befestigten Zustand mindestens teilweise.

Der Erfindung liegt nun die Aufgabe zugrunde, eine gattungsgemäße Vorrichtung zur Befestigung von Bauelementen auf Trapezdächern so zu verbessern, dass nicht nur auf einfache Weise eine Befestigung auf Trapezdächern ermöglicht wird, die an unterschiedliche Trapezformen adaptierbar ist, sondern die insbesondere auch im Hinblick auf die Kräfte- und Drehmomentverhältnisse der Befestigung optimal einstellbar ist.

### Offenbarung der Erfindung

Diese Aufgabe wird durch eine Vorrichtung zur Befestigung von Bauelementen auf Trapezdächern mit den Merkmalen des Anspruchs 1 gelöst. Dadurch, dass die Seitenelemente senkrecht zu den Längsseiten teleskopartig verlängerbar sind, kann die Befestigung in den seitlichen Flanken der Trapezprofile in Richtung der Profiltäler verschoben werden. Es kann mit anderen Worten der Abstand der seitlichen Befestigungen von den Trapezprofiltälern minimiert werden, was im Hinblick auf die entstehenden Kräfte- und Drehmomentverhältnisse optimal ist. Hierdurch wird die Stabilität der Befestigung gegenüber den aus dem Stand der Technik bekannten Befestigungsvorrichtungen wesentlich erhöht und gleichzeitig die Gefahr einer Beschädigung der Trapezdachprofile wesentlich verringert.

Durch die in den abhängigen Ansprüchen aufgeführten Maßnahmen sind vorteilhafte Weiterbildungen und Verbesserungen der im unabhängigen Anspruch angegebenen Vorrichtung möglich. So sieht eine sehr vorteilhafte Ausführungsform vor, dass auch das Grundelement senkrecht zu den Längsseiten teleskopartig verlängerbar ist. Durch die Kombination eines senkrecht zu den Längsseiten teleskopartig verlängerbaren Grundelements und von senkrecht zu den Längsseiten verlängerbaren Seitenelementen wird eine praktisch beliebige Anpassungsmöglichkeit an unterschiedlichste Trapezdachformen bei gleichzeitig optimaler Kraft- und Drehmomenteinleitung im befestigten Zustand der Vorrichtung realisiert.

Dabei ist durch die gelenkige Anbindung der Seitenelemente an das Grundelement nicht nur eine Anpassung an unterschiedliche Trapezwinkel, sondern durch die Möglichkeit der teleskopartigen Verlängerung sowohl des Grundelements als auch der Seitenelemente eine Anpassung an unterschiedlichste Trapezformen möglich.

Bevorzugt sind dabei sowohl das Grundelement als auch die Seitenelemente durch Parallelverschieben zweier übereinanderliegender Bleche teleskopartig verlängerbar.

Um ein geführtes Parallelverschieben zu ermöglichen, ist vorzugsweise vorgesehen, dass die übereinanderliegenden Bleche sowohl des Grundelements als auch der Seitenelemente jeweils wenigstens ein Führungselement aufweisen. Das Führungselement ist gemäß einer sehr vorteilhaften Ausführungsform, die insbesondere im Hinblick auf die einfache Herstellung der Bleche vorteilhaft ist, bevorzugt als halbzylinderförmige Ausbuchtung der Bleche ausgebildet, wobei im untenliegenden Blech in der halbzylinderförmigen Ausbuchtung, bevorzugt in deren Mitte, ein Gewinde und im obenliegenden Blech in der halbzylinderförmigen Ausbuchtung ein Langloch angeordnet sind und wobei das obenliegende Blech mittels einer Schraube, die in das Gewinde im untenliegenden Blech eindrehbar ist, oder mittels einer in das Gewinde eindrehbaren Gewindestange und einer Schraubenmutter an dem untenliegenden Blech fixierbar ist.

Eine andere Ausgestaltung sieht vor, dass die Seitenelemente durch in- oder aneinander verschieblich geführte Profilelemente gebildet werden.

Auch das Grundelement kann durch in- oder aneinander verschieblich geführte Profilelemente gebildet werden. Die Profilelemente können dabei so ausgebildet sein, dass die verschieblich geführten Grund- bzw. Seitenelemente unter Berücksichtigung der Verschieblichkeit aneinander befestigt sind, also jeweils als ein Teil handhabbar sind.

Die gelenkige Verbindung der Seitenelemente mit dem Grundelement kann auf die unterschiedlichste Weise realisiert werden. Eine vorteilhafte Ausgestaltung sieht vor, dass die Seitenelemente mit Scharnieren an den Längsseiten des Grundelements angelenkt sind.

Die Seitenelemente weisen vorteilhafterweise Befestigungseinrichtungen zur Befestigung an den Trapezprofilen des Trapezdaches auf.

### Kurze Beschreibung der Zeichnungen

Ausführungsbeispiele der Erfindung sind in den Zeichnungen dargestellt und werden in der nachfolgenden Beschreibung näher erläutert.

Es zeigen:

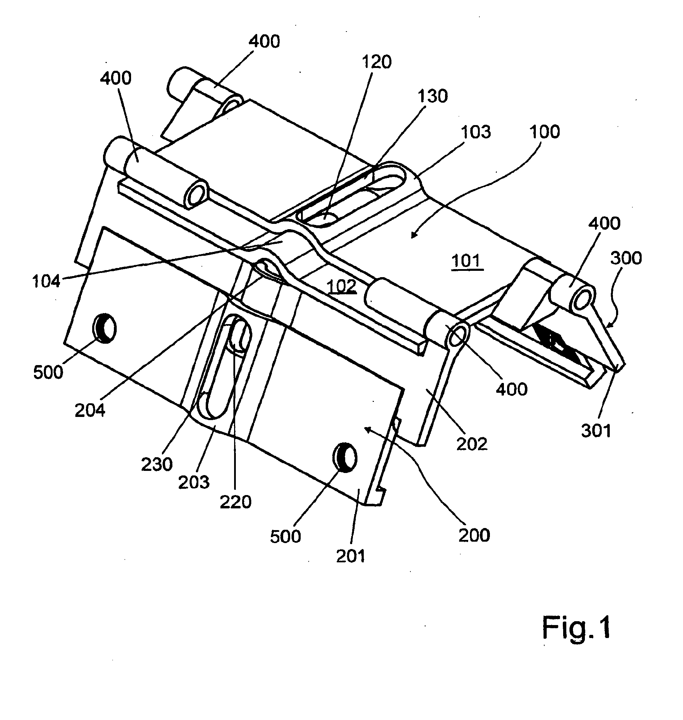

- Fig. 1: eine isometrische Darstellung einer Ausführungsform der erfindungsgemäßen Vorrichtung;

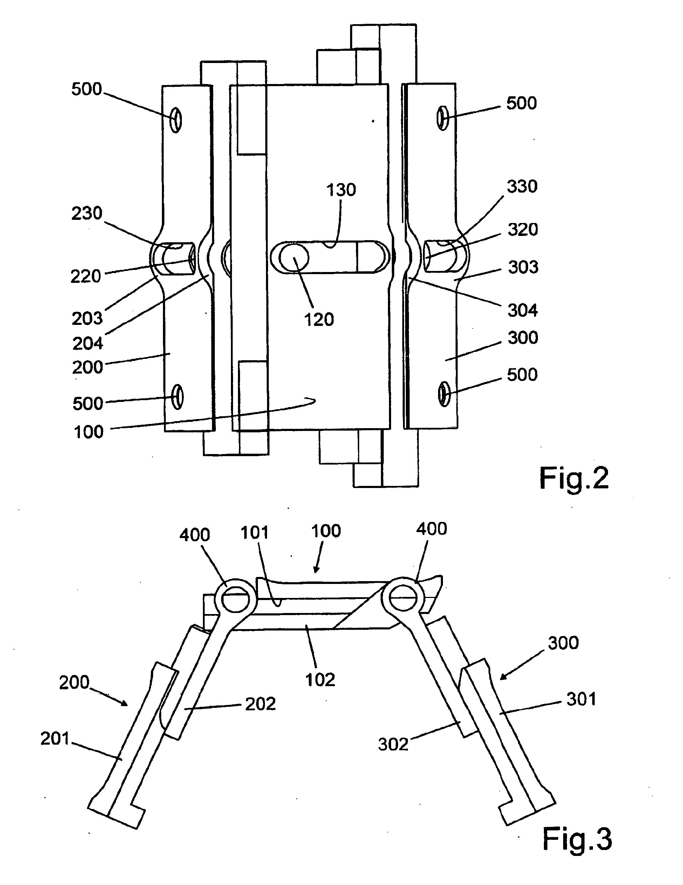

- Fig. 2: eine Draufsicht auf die in Fig. 1 dargestellte erfindungsgemäße Vorrichtung;
- Fig. 3: eine Vorderansicht der erfindungsgemäßen Vorrichtung und
- Fig. 4: die erfindungsgemäße Vorrichtung mit daran angeordneter Gewindestange für die Befestigung von Solarzellen in isometrischer Darstellung.

### Ausführungsformen der Erfindung

Eine Vorrichtung zur Befestigung von Bauelementen auf Trapezdächern, insbesondere zur Befestigung von Solarzellen, beispielsweise Fotovoltaikelementen oder solarthermischen Elementen auf Trapezdächern, weist ein Grundelement 100 auf, an dem mit beispielsweise Scharnieren 400 Seitenelemente angelenkt sind, sodass der Winkel, den die Seitenelemente mit dem Grundelement einschließen, variabel und an unterschiedliche Trapezprofilformen der Trapezdächer anpassbar ist. Das Grundelement 100 und die Seitenelemente 200, 300 weisen eine rechteckförmige Gestalt auf, wobei sie jeweils senkrecht zu ihren Längsseiten, womit hier im montierten Zustand (nicht gezeigt) die langen, in Längsrichtung der Trapezprofile verlaufenden Seiten gemeint sind, teleskopartig verlängerbar sind. Diese Verlängerung wird ermöglicht durch übereinanderliegende und parallel verschieblich aneinander geführte Bleche 101, 102; 201, 202 und 301, 302. Diese Bleche weisen jeweils Führungselemente in Form von im Wesentlichen halbzylinder- oder teilzylinderförmigen Erhebungen 103, 104; 203 bzw. 204 und 303 bzw. 304 auf, die gewissermaßen Führungsschienen bilden, an denen die Bleche aneinander seitlich unverrückbar geführt und dennoch verschieblich angeordnet sind.

Dabei weist das obere Führungselement eine Befestigungseinrichtung in Form eines Langlochs 130; 230; 330 auf, wohingegen in dem unteren Führungselement, d.h. in der teilzylinderförmigen Ausbuchtung, eine Gewindebohrung 120; 220; 320 angeordnet ist. Es versteht sich, dass die Erfindung nicht auf eine Befestigungseinrichtung in Form eines Langlochs beschränkt ist, sondern, dass rein prinzipiell auch andere Befestigungseinrichtungen denkbar sind.

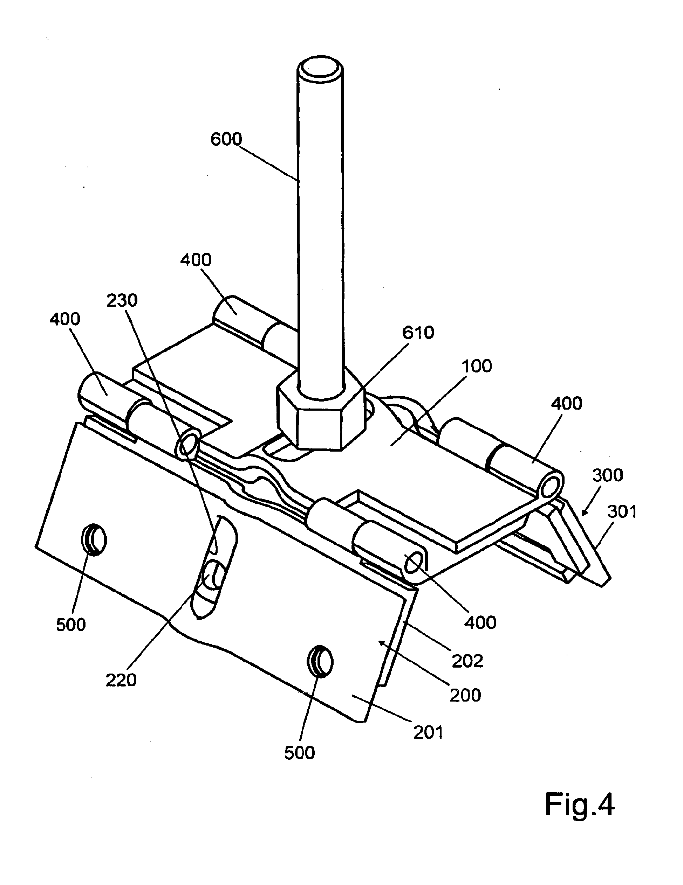

Zur Fixierung der Bleche im verschobenen Zustand wird beispielsweise eine Schraube oder eine Gewindestange in das Gewinde 120; 220; 320 eingedreht, wobei deren Schraubenkopf bzw. eine Schraubenmutter im fixierten Zustand, das Langloch seitlich überdeckend, auf dem oberen Führungselement 103; 203; 303 aufliegt und so das obere Blech 101; 201; 301 jeweils an das untere Blech 102; 202; 302 drückt. In Fig. 4 ist dies anhand des Grundelements 100 dargestellt. In diesem Falle ist die Gewindestange 600 in das untere Gewinde 120 eingedreht. Mittels der Schraubenmutter 610 wird das obere Blech 101 an dem unteren Blech 102 fixiert. Gleichzeitig weist die Gewindestange 600 eine weit über das Grundelement hinausragende Länge auf, um an ihr beispielsweise ein Profilelement, welches zur Befestigung der Solarzelle dient, auf an sich bekannte Weise zu befestigen. In den Seitenelementen 200, 300, d.h. insbesondere in den obenliegenden Blechen 201, 301, sind Öffnungen 500 vorgesehen, die zur Befestigung der Vorrichtung an seitlichen Flanken eines Trapezprofils (nicht dargestellt), beispielsweise mittels Schrauben (nicht dargestellt) dienen.

Dieses vorstehend beschriebene Grundelement 100 und die Seitenelemente 200, 300 sind im Grunde Profilelemente, die aneinander verschieblich geführt sind. Es versteht sich, dass die Erfindung nicht auf die vorstehend beschriebene Ausbildung beschränkt ist, sondern dass rein prinzipiell unterschiedlichste Profilelemente vorgesehen sein können, die in- oder aneinander verschieblich geführt sind. Dabei kann die verschiebliche Führung auch so ausgestaltet sein, dass sowohl die teleskopartig verschieblichen Einzelteile des Grundelements als auch die teleskopartig verschieblichen Einzelteile der Seitenelemente 200, 300 unter Berücksichtung der Verschieblichkeit aneinander befestigt sind, sodass das gesamte Bauteil auf einfache Weise als Ganzes handhabbar ist und durch Verschiebung der Einzelelemente des Grundelements 100 und der Einzelelemente der Seitenelemente 200, 300 an unterschiedliche Trapezformen anpassbar ist. Insbesondere durch die teleskopartige Verlängerungsmöglichkeit der Seitenelemente 200, 300, kann auf diese Weise eine Befestigung möglichst nahe der Trapezprofiltäler bewerkstelligt werden, was insbesondere im Hinblick auf angreifende Kräfte und dabei auftretende Drehmomente optimal ist. Es kann so nämlich eine möglichst tiefliegende Befestigung nahe der Trapezprofiltäler an den Seitenelementen vorgenommen werden, wodurch das Drehmoment durch Verkleinerung des Hebelarms und damit die Belastung der Trapezprofile verringert werden und so auch bei Auftreten größerer Kräfte beispielsweise hervorgerufen durch Windkräfte eine eventuelle Beschädigung der Trapezprofilelemente und damit des Trapezdaches wirkungsvoll vermieden werden.

Die vorstehend beschriebene Befestigungsvorrichtung besteht bevorzugt aus Edelstahl oder Stahl. Sie kann auch aus einer Legierung bestehen, die eine hinreichende Elastizität aufweist.

## Patentansprüche

1. Vorrichtung zur Befestigung von Bauelementen auf Trapezdächern, umfassend ein im Wesentlichen rechteckförmiges Grundelement (100) mit wenigstens einer Befestigungseinrichtung für das Bauelement und an jeweils zwei Längsseiten des Grundelements (100) gelenkig befestigten Seitenelementen (200, 300) mit Befestigungseinrichtungen (500) zur Befestigung auf dem Trapezdach, **dadurch gekennzeichnet, dass** die Seitenelemente (200, 300) senkrecht zu den Längsseiten teleskopartig verlängerbar sind.

2. Vorrichtung nach Anspruch 1, **dadurch gekennzeichnet, dass** das Grundelement (100) senkrecht zu den Längsseiten teleskopartig verlängerbar ist.

3. Vorrichtung nach Anspruch 2, **dadurch gekennzeichnet, dass** das Grundelement (100) durch Parallelverschieben zweier übereinanderliegender Bleche (101, 102) teleskopartig verlängerbar ist.

4. Vorrichtung nach Anspruch 1, **dadurch gekennzeichnet, dass** die Seitenelemente (200, 300) durch Verschieben von übereinanderliegenden Blechen (201, 202; 301, 302) verlängerbar sind.

5. Vorrichtung nach Anspruch 3 oder 4, **dadurch gekennzeichnet, dass** die übereinanderliegenden Bleche (101, 102; 201, 202; 301, 302) sowohl des Grundelements (100) als auch der Seitenelemente (200, 300) jeweils wenigstens ein Führungselement (103, 104; 203, 204; 303, 304) zum geführten Parallelverschieben aufweisen.

6. Vorrichtung nach Anspruch 5, **dadurch gekennzeichnet, dass** das wenigstens eine Führungselement eine halbzylinderförmige Ausbuchtung (103, 104; 203, 204; 303, 304) der Bleche ist, wobei im untenliegenden Blech (102; 202; 302) ein Gewinde (120; 220; 320) und im obenliegenden Blech ein Langloch (130, 230, 330) angeordnet sind und wobei das obenliegende Blech (101; 201; 301) mittels einer in das Gewinde eindrehbaren Schraube oder einer Gewindestange (600) und einer Schraubenmutter (610) an dem untenliegenden Blech (102; 202; 302) fixierbar ist.

7. Vorrichtung nach Anspruch 1, **dadurch gekennzeichnet, dass** die Seitenelemente (200, 300) durch in- oder aneinander verschieblich geführte Profilelemente gebildet werden.

8. Vorrichtung nach Anspruch 2, **dadurch gekennzeichnet, dass** das Grundelement (100) durch in- oder aneinander verschieblich geführte Profilelemente gebildet werden.

9. Vorrichtung nach Anspruch 1, **dadurch gekennzeichnet, dass** die Seitenelemente (200, 300) mittels Scharnieren (400) an den Längsseiten des Grundelements (100) angelenkt sind.

10. Vorrichtung nach Anspruch 1, **dadurch gekennzeichnet, dass** die Seitenelemente (200, 300) Befestigungseinrichtungen (500) zur Befestigung an Trapezprofilen der Trapezdächer umfassen.

## Claims

1. An apparatus for fastening components to trapezoidal roofs, comprising a substantially rectangular base element (100) with at least one fastening device for the component and side elements (200, 300) which are fixed in an articulated manner on two respective sides of the base element (100) by fastening devices (500) for fastening to the trapezoidal roof, **characterized in that** the side elements (200) are telescopically extendable perpendicularly to the longitudinal sides.

2. An apparatus according to claim 1, **characterized in that** the base element (100) is telescopically extendable perpendicularly to the longitudinal sides.

3. An apparatus according to claim 2, **characterized in that** the base element (100) is telescopically extendable by parallel displacement of two stacked sheets (101, 102).

4. An apparatus according to claim 1, **characterized in that** the side elements (200, 300) are extendable by displacement of stacked sheets (201, 202; 301, 302).

5. An apparatus according to claim 3 or 4, **characterized in that** the stacked sheets (101, 102; 201, 202; 301, 302) both of the base element (100) and also the side elements (200, 300) respectively comprise at least one guide element (103, 104; 203, 204; 303, 304) for guided parallel displacement.

6. An apparatus according to claim 5, **characterized in that** the at least one guide element is a semi-cylindrical depression (103, 104; 203, 204; 303, 304) of the sheets, a thread (120; 220; 320) is arranged in the bottom sheet (102, 202; 302) and an oblong hole (130, 230, 330) in the upper sheet, and wherein the upper sheet (101; 201, 301) can be fixed to the bottom sheet (102; 202; 302) by means of a screw nut (610) and a screw or threaded rod (600) which can be screwed into the thread.

7. An apparatus according to claim 1, **characterized in that** the side elements (200, 300) are formed by profile elements which are displaceably guided into or onto

8. An apparatus according to claim 2, **characterized in that** the base element (100) is formed by profile elements which are displaceably guided into or onto each other.

9. An apparatus according to claim 1, **characterized in that** the side elements (200, 300) are linked by means of hinges (400) to the longitudinal sides of the base element (100).

10. An apparatus according to claim 1, **characterized in that** the side elements (200, 300) comprise fastening devices (500) for fixing to trapezoidal profiles of the trapezoidal roofs.

## Revendications

1. Dispositif de fixation d'éléments de construction sur des toits en forme de trapèze comportant un élément de base (100) de forme essentiellement rectangulaire avec au moins un dispositif de fixation de l'élément de construction et des éléments latéraux (200, 300) articulés sur deux côtés longitudinaux respectifs de l'élément de base (100) avec des dispositifs de fixation (500) pour permettre la fixation sur le toit en forme de trapèze,
**caractérisé en ce que**
les éléments latéraux (200, 300) peuvent être prolongés télescopiquement perpendiculairement aux côtés longitudinaux.

2. Dispositif conforme à la revendication 1,
**caractérisé en ce que**
l'élément de base (100) peut être prolongé télescopiquement perpendiculairement aux côtés longitudinaux.

3. Dispositif conforme à la revendication 2,
**caractérisé en ce que**
l'élément de base (100) peut être prolongé télescopiquement par coulissement parallèle de deux tôles (101, 102) qui se superposent.

4. Dispositif conforme à la revendication 1,
**caractérisé en ce que**
les éléments latéraux (200, 300) peuvent être prolongés par coulissement de tôles (201, 202, 301, 302) qui se superposent.

5. Dispositif conforme à la revendication 3 ou 4,
**caractérisé en ce que**
les tôles (101 102, 201, 202, 301, 302) qui se superposent ainsi que l'élément de base (100) et les éléments latéraux (200, 300) comportent respectivement au moins un élément de guidage (103, 104, 203, 204, 303, 304) permettant de guider leur coulissement parallèle.

6. Dispositif conforme à la revendication 5,
**caractérisé en ce que**
l'élément de guidage est une nervure en relief semi-cylindrique (103, 104, 203, 204, 303, 304) des tôles, un filetage (120, 220, 320) étant situé dans la tôle inférieure (102, 202, 302) tandis qu'un perçage longitudinale (130, 230, 330) est situé dans la tôle supérieure, et la tôle supérieure (101, 201, 301) pouvant être fixée à la tôle inférieure (102, 202, 302) au moyen d'une vis ou d'une tige filetée (600) pouvant être vissée dans le filetage et d'un écrou (610).

7. Dispositif conforme à la revendication 1,
**caractérisé en ce que**
les éléments latéraux (200, 300) sont formés par des éléments profilés guidés en coulissement les uns dans ou sur les autres.

8. Dispositif conforme à la revendication 2,
**caractérisé en ce que**
l'élément de base (100) est formé par des éléments profilés guidés en coulissement les uns dans les autres ou les uns sur les autres.

9. Dispositif conforme à la revendication 1,
**caractérisé en ce que**
les éléments latéraux (200, 300) sont articulés sur les côtés longitudinaux de l'élément de base (100) au moyen de charnières (400).

10. Dispositif conforme à la revendication 1,
**caractérisé en ce que**
les éléments latéraux (200, 300) comportent des dispositifs de fixation (500) pour permettre leur fixation sur les profils trapézoïdaux du toit en forme de trapèze.
